# Europäisches Patentamt

# European Patent Office

# Office européen des brevets

(11) Publication number: **0 132 083**
**B1**

(12) **EUROPEAN PATENT SPECIFICATION**

(45) Date of publication of patent specification: **10.02.88**

(21) Application number: **84304566.7**

(22) Date of filing: **04.07.84**

(51) Int. Cl.⁴: **H 01 H 31/00,** H 01 H 33/66, H 02 B 7/00

(54) Interrupter/isolator assembly.

(30) Priority: **11.07.83 GB 8318697**

(43) Date of publication of application:
**23.01.85 Bulletin 85/04**

(45) Publication of the grant of the patent:
**10.02.88 Bulletin 88/06**

(84) Designated Contracting States:
**BE DE FR NL**

(56) References cited:
**DE-A-3 143 279**
**GB-A-1 156 919**
**GB-A-2 129 617**
**US-A-3 590 186**

(73) Proprietor: **ASSOCIATED ELECTRICAL INDUSTRIES LIMITED**
**1 Stanhope Gate**
**London W1A 1EH (GB)**

(72) Inventor: **Hodkin, George Alfred**
**26 Oakley Drive Long Whatton, Loughborough Leicestershire (GB)**
Inventor: **McKean, Brian**
**Woodley House, Woodley Street Ruddington Nottingham, NG11 6EP (GB)**

(74) Representative: **Kirby, Harold Victor Albert**
**Central Patent Department Wembley Office The General Electric Company, p.l.c. Hirst Research Centre East Lane**
**Wembley Middlesex HA9 7PP (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to an interrupter/isolator assembly for use in ring main units and particularly to vacuum ring main units in which the interrupter is a vacuum switch.

Ring main units consist of three sections connected by busbars. Two sections are for connecting the unit into the ring main or for earthing the adjacent part of the ring main if required and comprise an interrupter/isolator device for switching each of the busbars into or out of connection with the ring main. The third section forms a tee-off from the busbars through high voltage fuses to outgoing terminals and comprises an interrupter/isolator device between each fuse and the respective busbar.

GB—A—1156919 discloses a circuit breaker incorporating main contacts and a vacuum switch in which opening and closure of the circuit occurs within the vacuum switch rather than at the main contacts. The main contacts in that case incorporate a rotary contact blade engageable with either one of two fixed contacts, and the vacuum switch is connected across the main contacts, so that on opening of the main contacts the vacuum switch remains closed until the main contacts are open, to provide circuit interruption, and on closure the vacuum switch is closed before the main contacts are closed.

The object of the invention is to provide a new and improved form of interrupter/isolator device which simultaneously operates both the isolator and the switch using a simplified mechanism.

Accordingly the invention provides an interrupter/isolator assembly for a ring main unit comprising a support for a vacuum switch, a conducting member connected electrically in use to a contact of the switch and movable to engage either an isolator contact or an earth contact and a cam which actuates a cam follower to operate a movable contact of the vacuum switch for opening or closing the switch in a manner such that the making or breaking of the current path occurs within the vacuum switch and not at the isolator or earth contacts.

The conducting member is linearly movable and has contacts at opposite ends for engagement, in use, with either said isolator contact or said earth contact and also provides the cam, the latter consisting of two cut-out portions in one side of the member positioned such that the cam follower follows one or other of them to effect closure of the vacuum switch after engagement of one of the member contacts with either the isolator or the earth contact.

The member is preferably a conducting bar linearly movable along its longitudinal axis so that the member contacts can engage with the isolator or earth contacts respectively. The support may further include a plurality, preferably four, of fixed rotatable rollers positioned so as to form a path for the bar to move between them.

Thus the current path is made in the vacuum switch rather than at the isolator or earth contact and the opposite occurs when the current path is broken. The cam may for example have a sloping portion so that the cam follower may easily move into and out of a flat portion where it remains whilst the vacuum switch contacts are engaged.

The cam follower, which may be a roller, is constrained not to move longitudinally relative to the bar, for example by elongate slots in the support, but rotates as the bar is moved longitudinally past it, so that when a cut-out portion of the bar is reached, the cam follower moves towards the bar as the sloping portion is moved past it and then remains in the flat portion of the cut-out. The roller may be carried by a conducting plunger which is in contact with the bar and which is biassed towards the bar so that it moves with the roller and engages the moving contact of the vacuum switch.

The support may also include plate springs biassed to provide frictional support for the member.

The invention will now be described in more detail with reference to the drawing in which:

Figure 1 shows a schematic diagram of part of a ring main unit,

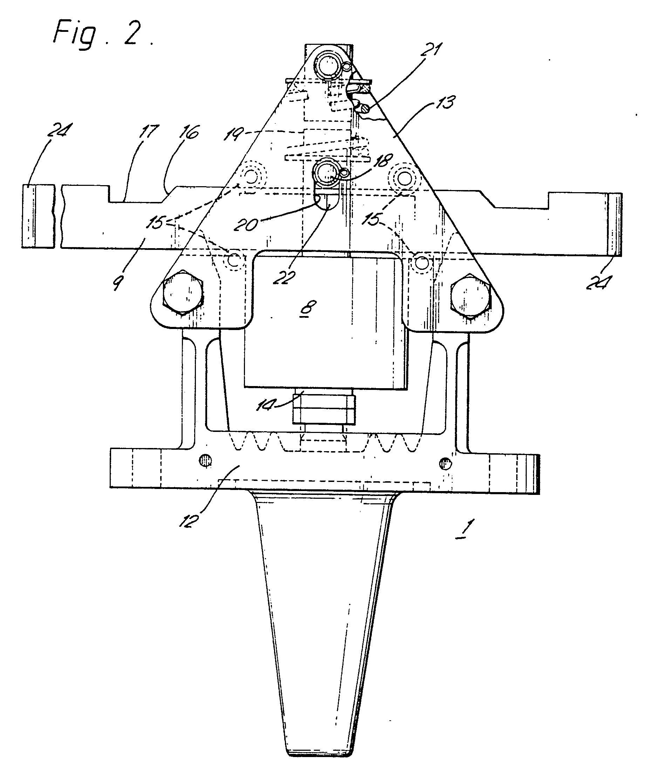

Figure 2 is a front elevational view of an interrupter/isolator assembly according to the invention,

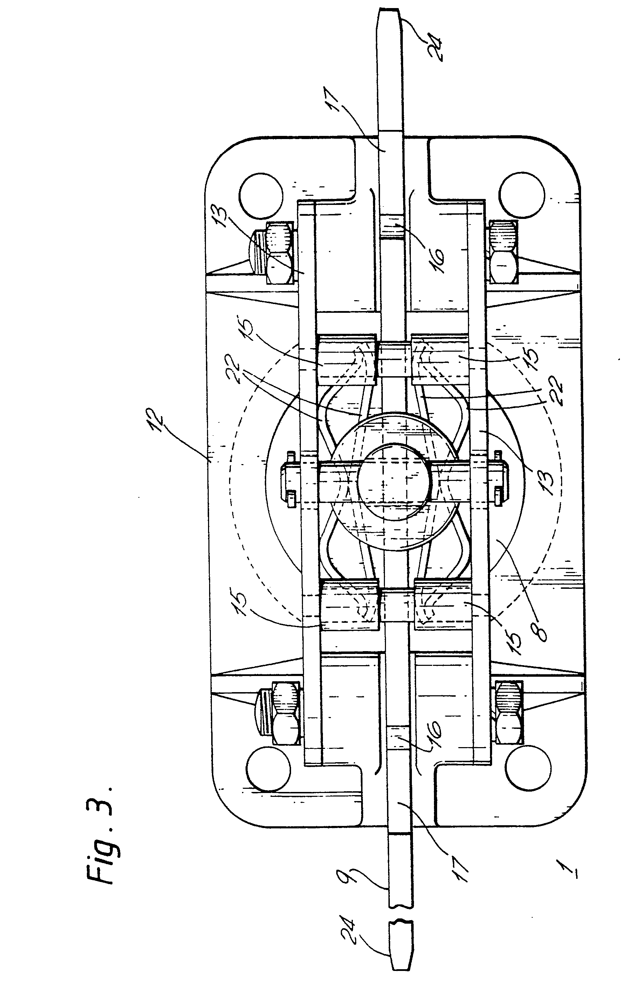

Figure 3 is a plan view of the assembly of Figure 2, and,

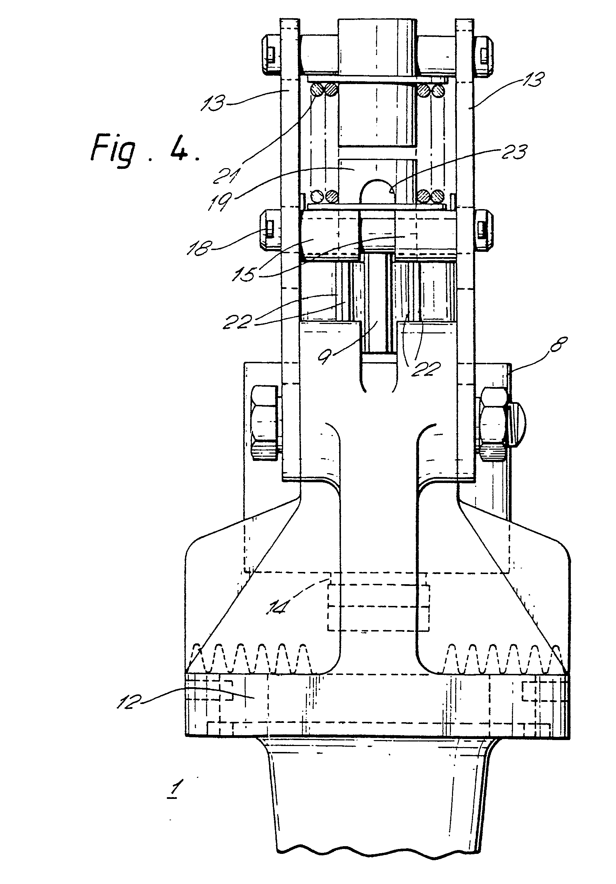

Figure 4 is a side view of the assembly of Figure 2.

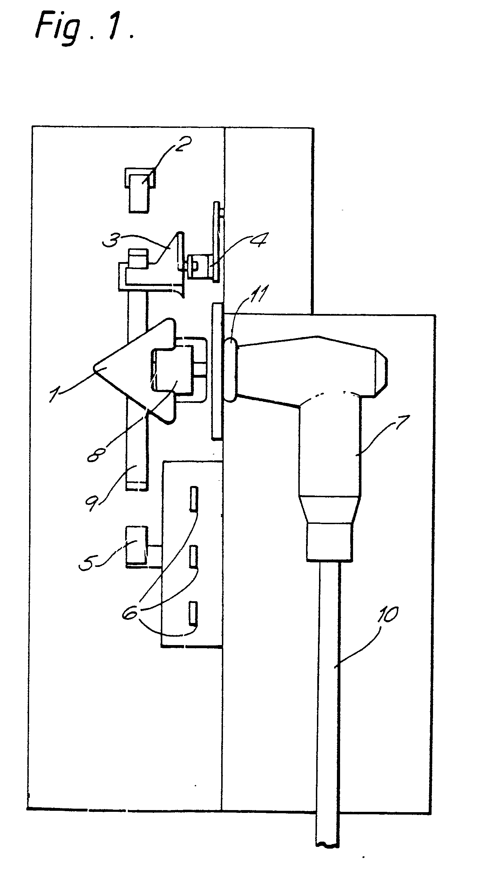

A complete ring main unit consists of two sections for connecting the unit into the ring main and a centre section forming a tee-off to outgoing terminals. In a three phase ring main there are three cables going into the unit and three cables coming out, one for each phase, and one busbar for each phase within the unit connected to the respective cables when the unit is switched into the ring main. In Figure 1, one such cable 10 is shown entering the unit via a moulded disconnecting contact assembly 7, such as that sold under the trade name "Elastimold". These disconnecting contacts may co-operate directly with the bushing 11 which extends the fixed contact of a vacuum switch 8, shown as part of the interrupter/isolator assembly 1, which constitutes the present invention, thus eliminating the need for a conventional cable box.

The moving contact of the vacuum switch 8 is connected to a conductive moving bar 9 which engages either the isolator contact 5 or the earth contact 2 and is operated by the drive mechanism 4 through a drive insulator 3. The bar is engaged with the isolator contact 5 which is connected to the respective one of the busbars 6 when the unit is connected into the ring main, and is engaged with the earth contact 2 when it is desired to earth sections of the ring main between ring main units. When it is desired to switch the ring main unit out of the ring main but not to earth the ring main, the bar is in the position shown.

The central tee-off section of the ring main unit has a similar construction. In this section the fixed contact of the vacuum switch is connected via a high voltage fuse to the output terminal for connection to a cable or a distribution transformer. An additional earthing switch is also necessary to ensure that both ends of a blown fuse are dead to permit safe replacement thereof. The combination of a ring main unit and a transformer is known as a unit type package substation which can be transported and erected as a single piece suitable for connecting into a ring main.

The interrupter/isolator assembly 1 will now be described in more detail with reference to the remaining Figures, in which the assembly is shown as being composed of a base part 12 and two upper body parts 13 supporting between them a vacuum switch 8. The switch 8 is operated by means of a conductive bar 9 movable longitudinally across the top face of the switch and having a contact 24 at each end for engaging with either the isolator or the earth contact as described above. The bar runs between four fixed rollers 15 which are positioned two on either side of the bar. A further roller 18 is positioned on the side of the bar away from the vacuum switch and constrained to move only towards the switch by means of elongate slots 20 in the upper body parts 13. The roller is biassed towards the bar by means of a spring 21 which acts on a conductive plunger 19 carrying the roller 18.

In use, the bar is operated by the drive mechanism 4 (Figure 1) to move longitudinally. When this happens the roller rotates as the bar slides past but is held in position by the slots 20 and the bar. The bar, however, has two cam sections each with a sloping part 16 and a flat part 17, cut out of the bar as shown. When either of these sections reaches the roller 18, the roller 18 is allowed by the elongated slots 20 to move into the cut-out section and thus the plunger 19 is biassed into engagement with the moving contact of the vacuum switch 8 which is then switched on, forming the current path from the fixed contact 14 to the isolator or earth contact.

In order to provide a frictional force on the bar 9 to keep it in a desired longitudinal position, flat plate springs 22 are provided within the upper body part with their flat faces against the bar.

The cut-out cam sections of the bar are positioned in such a way that if, for example, it is desired to connect the ring main unit to the ring main, the bar is moved towards the isolator contact and is engaged therewith before the cam reaches the roller 18 and thus before the vacuum switch is switched so that the making of the current path takes place in the vacuum switch. The same applies for the cam section associated with the earth contact.

The profile of the cam may be varied to give a controlled movement of the vacuum switch moving contact whose travel is kept low thus leading to the possibility of a compact design of vacuum switch.

Further advantages of the interrupter/isolator assembly as described above are that the straight line motion of the bar reduces the speed of the isolator contact engagement to approximately that of the vacuum switch contacts.

Also the operation of the isolator and vacuum switch elements is simplified due to the fact that they are simultaneously operated by one mechanism only.

**Claims**

1. An interrupter/isolator assembly (1) for a ring main unit comprising a support (12, 13) for a vacuum switch (8), a conducting member (9) connected electrically in use to a contact of the switch (8) and movable to engage either an isolator contact (5) or an earth contact (2), and a cam (16, 17) which actuates a cam follower (18) to operate a movable contact of the vacuum switch for opening or closing the switch in a manner such that the making or breaking of the current path occurs within the vacuum switch and not at the isolator or earth contacts, characterised in that the conducting member is linearly movable and has contacts at opposite ends for engagement, in use, with either said isolator contact or said earth contact and also provides the cam (16, 17), the latter consisting of two cut-out portions in one side of the member positioned such that the cam follower (18) follows one or other of them to effect closure of the vacuum switch after engagement of one of the member contacts with either the isolator (5) or the earth contact (2).

2. An interrupter/isolator assembly according to Claim 1 wherein said conducting member (9) is a conducting bar linearly movable along its longitudinal axis so that the member contacts can engage with the isolator (5) or earth contacts (2) respectively.

3. An interrupter/isolator assembly according to Claim 2 wherein said cam follower (18) is a roller and is constrained not to move transversely relative to said bar but rotates as the bar is moved longitudinally past it so that when a cut-out portion of the bar is reached, the cam follower (18) moves towards the bar as the sloping portion is moved past it and then remains in the flat portion of the cut-out.

4. An interrupter/isolator assembly according to Claim 3 wherein said roller is carried by a conducting plunger which is in contact with the bar and which is biassed towards the bar so that it moves with the roller and engages the moving contact of the vacuum switch.

5. An interrupter/isolator assembly according to either Claim 3 or Claim 4 wherein said support includes a plurality of fixed rotatable rollers positioned so as to form a path for the bar.

6. An interrupter/isolator assembly according to any preceding Claim wherein said support includes plate springs biassed to provide frictional support for the member.

**Patentansprüche**

1. Unterbrecher-/Trenneranordnung (1) für eine Ringhauptleitungseinheit, aufweisend eine Tragvorrichtung (12, 13) für einen Vakuumschalter (8), ein leitendes Glied (9), das im Betrieb elektrisch an einen Kontakt des Schalters (8) angeschlossen ist und so bewegbar ist, dass es entweder mit einem Isolationskontakt (5) oder einem Massekontakt (2) in Eingriff steht, und eine Kurvenbahn (16, 17), die ein Kurvengleitstück (18) dahingehend steuert, einen bewegbaren Kontakt des Vakuumschalters zum Öffnen oder Schliessen des Schalters in einer solchen Weise zu betätigen, dass die Herstellung oder Unterbrechung des Strompfades innerhalb des Vakuumschalters und nicht an den Isolations- oder Massekontakten erfolgt, dadurch gekennzeichnet, dass die leitende Glied linear bewegbar ist und an gegenüberliegenden Enden Kontakte aufweist, die im Betrieb entweder mit dem Isolationskontakt oder dem Massekontakt in Eingriff stehen, und auch die Kurvenbahn (16, 17) ausbildet, wobei letztere aus zwei in einer Seite des Gliedes ausgeschnittenen Bereichen besteht, die derart positioniert sind, dass das Kurvengleitstück (18) entweder der einen oder der anderen von ihnen folgt, um das Schliessen des Vakuumschalters nach dem Angreifen eines der Gliederkontakte an den Isolations- (5) oder den Massekontakt (2) zu bewirken.

2. Unterbrecher-/Trenneranordnung nach Anspruch 1, in welcher das leitende Glied (9) eine leitende Stange ist, die linear so entlang ihrer Längsachse bewegbar ist, dass die Gliederkontakte jeweils an den Isolations- (5) oder Massekontakt (2) angreifen können.

3. Unterbrecher-/Trenneranordnung nach Anspruch 2, in welcher das Kurvengleitstück (18) eine Rolle ist und so zwangläufig ist, dass es sich nicht transversal bezüglich der Stange bewegt, sondern rotiert, sowie die Stange in Längsrichtung an ihm vorbei bewegt wird, so dass, wenn ein ausgeschnittener Bereich der Stange erreicht ist, sich die Kurvenrolle (18) zur Stange hin bewegt, wenn der geneigte Bereich an ihr vorbei bewegt wird, und daraufhin im flachen Bereich des Ausschnitts bleibt.

4. Unterbrecher-/Trenneranordnung nach Anspruch 3, in welcher die Rolle von einem leitenden Kolben getragen wird, der in Kontakt zu der Stange steht und der so zur Stange hin vorgespannt wird, dass er sich mit der Rolle bewegt und in den sich bewegenden Kontakt des Vakuumschalters eingreift.

5. Unterbrecher-/Trenneranordnung nach Anspruch 3 oder Anspruch 4, in welcher die Tragvorrichtung mehrere unverschiebbare drehbare Rollen aufweist, die so positioniert sind, dass sie für die Stange eine Bahn bilden.

6. Unterbrecher-/Trenneranordnung nach jedem der vorhergehenden Ansprüche, in welchem die Tragvorrichtung Blattfedern aufweist, die vorgespannt sind, um für das Glied Reibauflagen vorzusehen.

## Revendications

1. Ensemble (1) formant interrupteur et isolateur, destiné à un élément de réseau annulaire comprenant un support (12, 13) de commutateur sous vide (8), un organe conducteur (9) connecté électriquement lors de l'utilisation à un contact du commutateur (8) et mobile afin qu'il puisse venir au contact soit d'un contact d'isolateur (5), soit d'un contact de masse (2), et une came (16, 17) qui manoeuvre un toucheau (18) afin qu'un contact mobile du commutateur sous vide soit manoeuvré et provoque l'ouverture ou la fermeture du commutateur d'une manière telle que la fermeture ou l'ouverture du trajet de circulation du courant est réalisée à l'intérieur du commutateur sous vide et non au niveau des contacts d'isolateur ou de masse, caractérisé en ce que l'organe conducteur est mobile linéairement et a des contacts à ses extrémités opposées afin que, lors de l'utilisation, il coopère, soit avec le contact d'isolateur, soit avec le contact de masse, et forme aussi la came (16, 17), celle-ci comprenant deux parties découpées d'un côté de l'organe conducteur et disposées de manière que le toucheau (18) suive l'une ou l'autre des parties découpées et assure la fermeture du commutateur sous vide après la mise en coopération de l'un des contacts de l'organe conducteur avec le contact d'isolateur (5) ou avec le contact de masse (2).

2. Ensemble formant interrupteur et isolateur selon la revendication 1, dans lequel l'organe conducteur (9) est une barre conductrice mobile linéairement suivant son axe longitudinal afin que les contacts de l'organe conducteur puissent coopérer avec les contacts d'isolateur (5) ou de masse (2) respectivement.

3. Ensemble formant interrupteur et isolateur selon la revendication 2, dans lequel le toucheau (18) de came est un galet et ne peut pas se déplacer transversalement par rapport à la base mais peut tourner lorsque la barre est déplacée longitudinalement le long du galet si bien que, lorsqu'une partie découpée de la barre est atteinte, le toucheau de came (18) se déplace vers la barre lorsqu'il se déplace en face de la partie inclinée, et reste contre la partie plate de la découpe (4).

4. Ensemble formant interrupteur et isolateur selon la revendication 3, dans lequel le galet est porté par un plongeur conducteur qui est au contact de la barre et qui est repoussé vers la barre de manière qu'il se déplace avec le galet et vienne contre le contact mobile du commutateur sous vide.

5. Ensemble formant interrupteur et isolateur selon l'une des revendications 3 et 4, dans lequel le support comprend plusieurs galets rotatifs de position fixe placés de manière qu'ils délimitent un trajet de déplacement de la barre.

6. Ensemble formant interrupteur et isolateur selon l'une quelconque des revendications précédentes, dans lequel le support comporte des lames de ressort rappelées afin qu'elles supportent l'organe conducteur avec frottement.

*Fig . 1 .*

# Fig. 2.

Fig. 3.

0 132 083

Fig. 4.